# EUROPEAN PATENT APPLICATION

(11) **EP 3 273 628 A1**
(43) Date of publication of application: **24.01.2018**
(21) Application number: 17181845.3
(22) Date of filing: 18.07.2017
(51) Int. Cl.: H04J 3/06, G08B 25/00, H04W 56/00

(54) **COMMUNICATION SYSTEM AND COMMUNICATION DEVICE**

(30) Priority: 19.07.2016 JP 2016141594
(71) Applicant: Panasonic Intellectual Property Management Co., Ltd., Osaka-shi, Osaka 540-6207 (JP)
(72) Inventor: Harada, Kenji, Osaka-shi Osaka 540-6207 (JP); Kurita, Masanori, Osaka-shi Osaka 540-6207 (JP); Nagata, Masahiro, Osaka-shi Osaka 540-6207 (JP)
(74) Representative: Appelt, Christian W.

(57) **Abstract**

An object would be to propose a communication system capable of establishing synchronous communication between upper system slaves even when the upper system slaves fail in receiving a beacon signal from an upper system master. The communication system (10) includes a plurality of upper system slaves (2) and an upper system master (1). The upper system master (1) sends a first beacon signal to the plurality of upper system slaves (2) to thereby establish synchronous communication with the plurality of upper system slaves (2). The plurality of upper system slaves (2) include a plurality of lower system slaves (4) and a lower system master (3). The lower system master (3) sends a second beacon signal (B2) to the plurality of lower system slaves (4) when at least any one of the plurality of upper system slaves (2) is in a receiving incapable state of being incapable of receiving the first beacon signal.

## Description

### Technical Field

The present invention generally relates to communication systems and communication device, and particularly to a communication system for establishing synchronous communication and a communication device used therein.

### Background Art

In the past, there has been proposed a fire alarm system (communication system) including fire sensors for sensing a fire and a receiving device for establishing wireless communication with the fire sensors using a radio wave as a communication medium (for example, see Document 1 [JP 2006-343983 A]).

In the fire alarm system disclosed in Document 1, the fire sensor includes a sensing unit, a wireless transceiver, and a control unit. The sensing unit senses a fire by detecting change in temperature or smoke accompanied by the fire. The wireless transceiver sends to and receives from the receiving device a wireless signal. The control unit instructs the wireless transceiver to send the wireless signal including fire sensing information when at least the sensing unit senses a fire.

The receiving device includes a wireless transceiver and a control unit. The wireless transceiver sends to and receives from the fire sensors a wireless signal. The control unit controls the wireless transceiver and obtains the fire sensing information from the wireless signal received by the wireless transceiver.

A certain number of frames constitute a superframe. Each frame includes: one downstream time slot for delivery from the receiving device to the fire sensors; and multiple upstream time slots each of which is allocated to one of the fire sensors for delivery from the fire sensor to the receiving device. The control units of the receiving device and the fire sensors deliver various pieces of information including the fire sensing information by use of the superframe.

The control unit of the receiving device controls the wireless transceiver to send a synchronization signal within a downstream time slot of one of the frames included in the superframe. The control unit of the fire sensor determines a timing of start of an upstream time slot allocated thereto based on a point of time at which the synchronization signal is received by the wireless transceiver.

According to the fire alarm system (communication system) disclosed in Document 1, the fire sensors (upper system slaves) establish synchronous communication with the receiving device (upper system master) by use of the synchronization signal (beacon signal) from the receiving device (upper system master) as a reference. In some cases, one or more of the fire sensors (upper system slaves) may fail in receiving the synchronization signal (beacon signal) from the receiving device (upper system master) due to presence of obstacles or the like, for example. In these cases, a fire sensor (upper system slave) fails to establish synchronization using the synchronization signal (beacon signal). This may lead to a failure in synchronous communication between the fire sensors (upper system slaves).

### Summary of Invention

In view of the above insufficiency, an object of the present invention would be to propose a communication system and a communication device which are capable of establishing synchronous communication between upper system slaves even when the upper system slaves fail in receiving a beacon signal from an upper system master.

A communication system according to one aspect of the present invention includes a plurality of upper system slaves and an upper system master. The upper system master is configured to send a first beacon signal to the plurality of upper system slaves to thereby establish synchronous communication with the plurality of upper system slaves. The plurality of upper system slaves include a plurality of lower system slaves and a lower system master. The lower system master is configured to send a second beacon signal to the plurality of lower system slaves to thereby establish synchronous communication with the plurality of lower system slaves. The lower system master is configured to send the second beacon signal to the plurality of lower system slaves when at least any one of the plurality of upper system slaves is in a receiving incapable state of being incapable of receiving the first beacon signal.

A communication device according to one aspect of the present invention is used in the above communication system as the lower system master.

### Brief Description of Drawings

FIG. 1 is a block diagram of a communication system according to one embodiment of the present invention.
FIG. 2 is a flow chart of a sending process of a second beacon signal in a lower system master in the communication system of the above.
FIG. 3 is a flow chart of a stopping process of the second beacon signal in the lower system master in the communication system of the above.
FIG. 4 is an explanatory diagram of operations of the communication system of the above.

### Description of Embodiments

Hereinafter, embodiments of the present invention are described with reference to attached drawings.

### (EMBODIMENTS)

### 1 SUMMARY

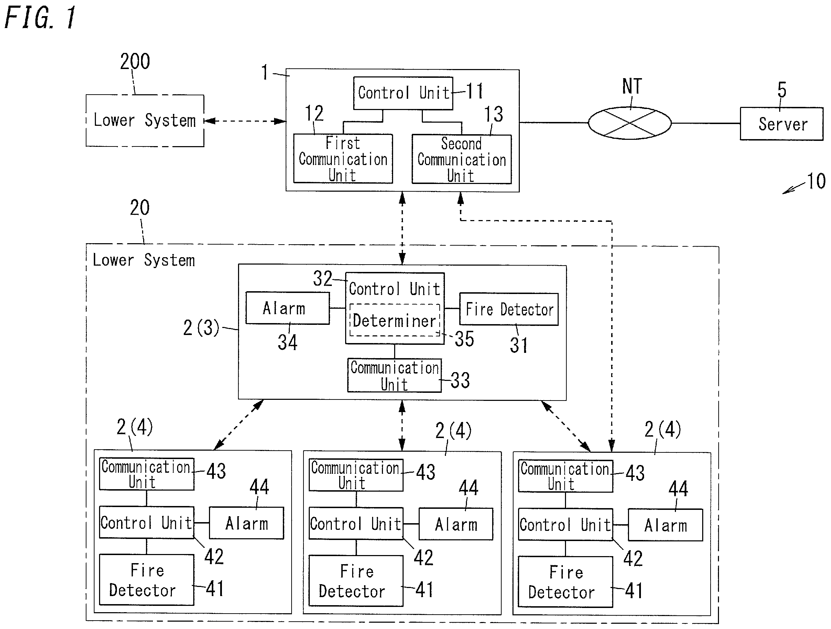

FIG. 1 shows a block diagram of a communication system 10 of the present embodiment. The communication system 10 of the present embodiment includes an upper system master 1 (which may be hereinafter abbreviated as an upper master 1), and a lower system 20. The lower system 20 includes a plurality of upper system slaves 2 (which may be abbreviated as upper slaves 2). The plurality of upper slaves 2 are include one lower system master 3 (which may be abbreviated as a lower master 3) and a plurality of (three in FIG. 1) lower system slaves 4 (which may be abbreviated as lower slaves 4). In the following descriptions, to distinguish different types of upper slaves 2 from each other, the term "lower master 3" and "lower slave 4" are used.

Note that, in relation to FIG. 1, broken arrows denote transmission paths of wireless signals. Only for simplification, FIG. 1 illustrates a broken arrow between one lower slave 4 of the three lower slaves 4 and the upper master 1 only, and does not illustrate broken arrows between the remaining two lower slaves 4 and the upper master 1.

The following description is made in relation to a case where the communication system 10 applies to a single dwelling. Examples of buildings where communication systems 10 apply may not be limited to single dwellings but may include multiple dwellings, and nonresidential buildings such as offices and stores.

Each upper slave 2 is a communication device configured to establish synchronous communication with the upper master 1 and other upper slave(s) 2. In the present embodiment, each upper slave 2 is a fire alarm configured to issue a warning when a fire occurs. When detecting occurrence of a fire, each upper slave 2 sends a notification signal for announcing that a fire has occurred, to other upper slave(s) 2 and the upper master 1. When each upper slave 2 receives the notification signal from other upper slave(s) 2, it issues a warning. When receiving the notification signal from an upper slave 2, the upper master 1 provides a notice that a fire has occurred, to a server 5 through a network NT.

In the communication system 10 of the present embodiment, the upper master 1 and each upper slave 2 are configured to establish synchronous communication. In more detail, the present embodiment is configured to allow wireless communication between the upper master 1 and the upper slaves 2, and between the upper slaves 2 by means of time division multiple access (TDMA). The upper master 1 sends a synchronization signal to each upper slave 2 with a constant period. The synchronization signal is a beacon signal (first beacon signal) for determining time slots necessary for establishing synchronous communication.

The lower master 3 is configured to, when at least any one of the upper slaves 2 is in a receiving incapable state of being incapable of receiving the first beacon signal from the upper master 1, send a beacon signal (second beacon signal) to the lower slave 4 on behalf of the upper master 1. Consequently, the communication system 10 of the present embodiment allows the upper slaves 2 to establish the synchronous communication with each other even when at least any one of the upper slaves 2 fails to receive the first beacon signal from the upper master 1.

### 2 DETAILS

Hereinafter, the communication system 10 of the present embodiment is described in more detail.

### 2.1 UPPER MASTER

First of all, configuration of the upper master 1 is described. The upper master 1 is a communication device with functions of communicating with the upper slave 2 and the server 5. The upper master 1 is configured to operate with power supplied from a commercial power supply. The upper master 1 includes a control unit 11, a first communication unit 12, and a second communication unit 13.

The control unit 11 mainly includes an MC (microcomputer) which executes at least one program stored in at least one memory to realize desired functions. Note that, the at least one program may be stored in the at least one memory in advance. However, the at least one program may be provided in the form of being stored in at least one recording medium such as memory cards, or may be provided through telecommunications circuits. For example, the at least one program can be downloaded from a server through the Internet by power line communication (PLC). Alternatively, the at least one program may be provided from a server by wireless communication.

The first communication unit 12 is configured to communicate with the individual upper slaves 2 by sending and receiving wireless signals using a radio wave as a communication medium. The first communication unit 12 includes an antenna, a sending circuit, and a receiving circuit. The sending circuit produces a wireless signal through modulation with data inputted from the control unit 11 and sends the wireless signal through the antenna. The receiving circuit demodulates a wireless signal received through the antenna and outputs data obtained through demodulation to the control unit 11. The first communication unit 12 sends and receives wireless signals in conformity with "specified small power radio station" stipulated in Article 6, paragraph 4, item 2 of regulations of enforcement of the Japanese Radio Act, for example.

The second communication unit 13 is a communication interface configured to communicate with the server 5. The second communication unit 13 is connected to the network NT (for example, the Internet) through a router or the like, and is configured to communicate with the server 5 through the network NT. The second communication unit 13 sends data inputted from the control unit 11 to the server 5. The second communication unit 13 outputs data received from the server 5 to the control unit 11. Note that, the first communication unit 12 and the second communication unit 13 may be integrated.

The control unit 11 instructs the first communication unit 12 to send to the individual upper slaves 2 the first beacon signal for determining the time slots for establishing the synchronous communication. To reduce power consumption, the control unit 11 sends the first beacon signal with a period (for example, a period of 60 seconds) of a superframe including multiple frames. Each frame has a period of 4 seconds, and includes multiple time slots. Mutually different time slots are allocated to the individual upper slaves 2. Each upper slave 2 establishes synchronization by use of the first beacon signal received, and performs a sending operation of sending a wireless signal within a time slot allocated to it (the upper slave 2) with reference to a timing of receiving the first beacon signal. Note that, date to be sent from the upper master 1 to the individual upper slaves 2 (for example, synchronization information (time information) for establishing synchronization) is sent by being included in the first beacon signal.

Additionally, when the first communication unit 12 receives a notification signal including a fire warning message from the upper slave 2, the control unit 11 sends a notice that a fire has occurred, to the server 5 through the second communication unit 13.

### 2.2 UPPER SLAVE

Next, configuration of the upper slave 2 is described. Each upper slave 2 is a fire alarm (communication device) with a function of issuing a fire warning in response to detection of occurrence of a fire, and another function of communicating with the upper master 1 and other upper slave(s) 2. Each upper slave 2 is mounted on a ceiling of a room, a corridor, or the like of a residence (a single dwelling, or a multiple dwelling). Each upper slave 2 is configured to operate with power supplied from a battery such as a dry cell.

First of all, configuration of the lower slaves 4 of the upper slaves 2. Each lower slave 4 includes a fire detector 41, a control unit 42, a communication unit 43, and an alarm 44.

The fire detector 41 is configured to detect a smoke accompanied by occurrence of a fire and change a detection amount (for example, a voltage) according to a generation amount of the smoke (concentration). Examples of a method for detecting a smoke may include a photoelectric method. The photoelectric method detects occurrence of a smoke by detecting, by a light receiving element, scattered light caused by reflection of light emitted from a light emitting element by particles of a smoke. The fire detector 41 may employs a thermal method of detecting occurrence of a fire based on heat accompanied by occurrence of a fire. The fire detector 41 compares the detection amount with a threshold value preliminary set by the fire detector 41. When the detection amount exceeds the threshold value, the fire detector 41 determines that a fire has occurred.

The control unit 42 mainly includes an MC (microcomputer) which executes at least one program stored in at least one memory to realize desired functions. Note that, the at least one program may be stored in the at least one memory in advance. However, the at least one program may be provided in the form of being stored in at least one recording medium such as memory cards, or may be provided through telecommunications circuits.

The communication unit 43 is configured to communicate with the upper master 1 and other upper slave(s) 2 by sending and receiving wireless signals using a radio wave as a communication medium. The communication unit 43 includes an antenna, a sending circuit, and a receiving circuit. The sending circuit produces a wireless signal through modulation with data inputted from the control unit 42 and sends the wireless signal through the antenna. The receiving circuit demodulates a wireless signal received through the antenna and outputs data obtained through demodulation to the control unit 42. The communication unit 43 sends and receives wireless signals in conformity with "security radio equipment for low power radio station" stipulated in Article 6, paragraph 4, item 3 of regulations of enforcement of the Japanese Radio Act, for example.

The alarm 44 includes a buzzer for producing a buzzer sound designated by the control unit 42 and a speaker for reproducing a voice message designated by the control unit 42.

The control unit 42 has a function of controlling the alarm 44 to issue a fire warning when the fire detector 41 detects occurrence of a fire. The fire warning means a warning which a fire alarm at the origin of the fire issues in order to announce occurrence of the fire. In a concrete example, when the fire detector 41 detects occurrence of a fire, the control unit 42 instructs the alarm 44 to make a buzz by its buzzer, or instructs the alarm 44 to produce a voice message stating "Fire!" or the like by its speaker.

Additionally, the control unit 42 has a function of controlling the communication unit 43 to send the notification signal to the upper master 1 and other upper slave(s) 2 when the fire detector 41 detects occurrence of a fire. In a concrete example, when the fire detector 41 detects occurrence of a fire, the control unit 42 first instructs the communication unit 43 to send the notification signal including the fire warning message for announcing that a fire has occurred, to the upper master 1. Thereafter, the control unit 42 instructs the communication unit 43 to send the notification signal including the fire warning message to other upper slave(s) 2.

When the communication unit 43 receives the notification signal from other upper slave(s) 2, the control unit 42 controls the alarm 44 to issue a fire warning. In summary, when at least any one upper slave 2 of the plurality of upper slaves 2 detects a fire, all the plurality of upper slaves 2 cooperate with each other to issue fire warnings.

Next, configuration of the lower master 3 of the upper slaves 2. The lower master 3 (which may be hereinafter referred to as a communication device 3) includes a fire detector 31, a control unit 32, a communication unit 33, and an alarm 34. Note that, the fire detector 31, the communication unit 33, and the alarm 34 of the lower master 3 have configurations and functions similar to or same as those of the fire detector 41, the communication unit 43, and the alarm 44 of the lower slave 4, and thus descriptions thereof are omitted for avoiding redundancy. Additionally, the control unit 32 of the lower master 3 mainly includes an MC, and has functions similar to or same as those of the control unit 42 of the lower slave 4. Descriptions for functions common to the control unit 32 of the lower master 3 and the control unit 42 of the lower slave 4 are omitted for avoiding redundancy.

It is preferable that the lower master 3 be located to be allowed to communicate with all the plurality of lower slaves 4. To allow all the plurality of upper slaves 2 to cooperate with each other to issue fire warnings, when the communication unit 33 receives the notification signal from any of the lower slaves 4, the control unit 32 of the lower master 3 relays this notification signal by instructing the communication unit 33 to send the notification signal to all other lower slave(s) 4. Therefore, even when the lower slaves 4 fail in establishing normal communication with each other due to obstacles or the like, the lower master 3 relays the notification signal from the lower slave 4 to allow all the plurality of upper slaves 2 to cooperate with each other to issue fire warnings.

In some cases, the upper slaves 2 may fail in receiving the first beacon signal from the upper master 1. For example, when supply of power from the commercial power supply to the upper master 1 is stopped due to a power failure, or when the upper master 1 malfunctions, the upper master 1 fails to send the first beacon signal. In such cases, the upper slaves 2 fail in receiving the first beacon signal. Or, in some case, obstacles, noises, or the like may prevent the upper slaves 2 from receiving the first beacon signal from the upper master 1.

In the communication system 10 of the present embodiment, the lower master 3 is configured to send the second beacon signal on behalf of the upper master 1 when at least any one of the plurality of upper slaves 2 fails to receive the first beacon signal from the upper master 1.

As for the lower master 3, the control unit 32 functions as a determiner 35. The determiner 35 determines whether the plurality of upper slaves 2 include at least one upper slave 2 in a state (receiving incapable state) of being incapable of receiving the first beacon signal from the upper master 1. In more detail, the determiner 35 performs a first determination process and a second determination process. The first determination process includes determining whether the lower master 3 is in a state (receiving capable state) of being capable of receiving the first beacon signal. The second determination process includes determining whether each individual lower slave 4 is in a state (receiving capable state) of being capable of receiving the first beacon signal.

In the first determination process, the determiner 35 determines whether the lower master 3 is in the receiving capable state or the receiving incapable state, on the basis of a receiving result which indicating whether the communication unit 33 of the lower master 3 succeeds or fails in receiving the first beacon signal. The determiner 35 determines that the lower master 3 is in the receiving capable state when the communication unit 33 succeeds in receiving the first beacon signal. The determiner 35 determines that the lower master 3 is in the receiving incapable state when the communication unit 33 fails in receiving the first beacon signal.

In the second determination process, the determiner 35 determines whether each lower slave 4 is in the receiving capable state or the receiving incapable state, on the basis of a receiving result which indicating whether the communication unit 43 of each lower slave 4 succeeds or fails in receiving the first beacon signal. As for each lower slave 4, the control unit 42 instructs the communication unit 43 to send the receiving result indicative of whether the communication unit 43 succeeds or fails in receiving the first beacon signal, to the lower master 3. When all the receiving results regarding the first beacon signal of the plurality of lower slaves 4 indicate "success", the determiner 35 of the lower master 3 determines that each lower slave 4 is in the receiving capable state. When the receiving results regarding the first beacon signal of the plurality of lower slaves 4 includes the receiving result indicative of "failure", the determiner 35 of the lower master 3 determines that the plurality of lower slaves 4 include at least one lower slave 4 in the receiving incapable state (hereinafter also referred to as a non-receiving slave 4). Note that, as for each lower slave 4, the control unit 42 may be configured to send the receiving result to the lower master 3 only when the communication unit 43 fails in receiving the first beacon signal. In this case, when the communication unit 43 does not receive the receiving result from the lower slave 4, the determiner 35 determines that this lower slave 4 is in the receiving capable state.

When a determination result given by the first determination process indicates "the lower master 3 is in the receiving capable state" and when a determination result given by the second determination process indicates "each lower slave 4 is in the receiving capable state", the determiner 35 determines that all the plurality of upper slaves 2 are in the receiving capable state. When the determination result given by the first determination process indicates "the lower master 3 is in the receiving incapable state" or when the determination result given by the second determination process indicates "the plurality of lower slaves 4 include at least one non-receiving slave 4", the determiner 35 determines that the plurality of upper slaves 2 include at least one upper slave 2 in the receiving incapable state.

The control unit 32 of the lower master 3 instructs the communication unit 33 to send the second beacon signal to each lower slave 4 when the determiner 35 determines that "the plurality of upper slaves 2 include at least one upper slave 2 in the receiving incapable state". Differently stated, the lower master 3 sends the second beacon signal to each lower slave 4 when it (the lower master 3) is in the receiving incapable state, or when at least one of the lower slaves 4 is in the receiving incapable state. With each lower slave 4 receiving the second beacon signal sent from the lower master 3, synchronization between the lower master 3 and each lower slave 4 is established.

Additionally, it is preferable that the lower master 3 send the second beacon signal at the same timing as the first beacon signal. Note that, the term "same timing" here includes the same timing in a strict sense and a timing considered substantially same, and may be interpreted as meaning that the first beacon signal and the second beacon signal are sent within the same period of time. The lower master 3 stores in its memory a sending period of the first beacon signal which is sent periodically from the upper master 1. The control unit 32 of the lower master 3 instructs the communication unit 33 to send the second beacon signal with the sending period stored in the memory with reference to a timing at which the communication unit 33 receives the first beacon signal. Therefore, the lower slaves 4 can receive the second beacon signal at the same timing as the first beacon signal. Note that, the lower master 3 periodically sends the second beacon signal based on the sending period stored in the memory with reference to the last timing of receiving the first beacon signal when it (the lower master 3) is in the receiving incapable state.

Additionally, it is preferable that the lower master 3 send the second beacon signal by use of a channel (frequency band) different from that for the first beacon signal. The control unit 11 of the upper master 1 instructs the first communication unit 12 to send the first beacon signal by a first channel. The control unit 11 of the upper master 1 instructs the first communication unit 12 to send the first beacon signal by a first channel. The control unit 32 of the lower master 3 instructs the communication unit 33 to send the second beacon signal by a second channel different from the first channel.

As for each lower slave 4, the control unit 42 distinguishes the first beacon signal and the second beacon signal from each other based on a channel of a wireless signal received by the communication unit 43. When the lower slave 4 is in the receiving capable state and succeeds in receiving both the first beacon signal and the second beacon signal, it establishes synchronization by use of the second beacon signal and performs the synchronous communication.

Additionally, in a case of determining that "the plurality of upper slaves 2 include at least one upper slave 2 in the receiving incapable state", the determiner 35 of the lower master 3 performs a determination process of determining whether the receiving incapable state no longer exists and all the upper slaves 2 are in the receiving capable state. When the receiving result of the first beacon signal regarding the upper slave 2 in the receiving incapable state is changed from "failure" to "success", the determiner 35 determines that the receiving incapable state of the upper slave 2 previously determined to be in the receiving incapable state no longer exists. And then, the determiner 35 determines whether all the upper slaves 2 are in the receiving capable state, on the basis of the receiving results of the first beacon signal of the individual upper slaves 2. When the receiving result of the first beacon signal for each of the upper slaves 2 indicates "success", the determiner 35 determines that all the upper slaves 2 are in the receiving capable state. In summary, in a case of determining that "the plurality of upper slaves 2 include at least one upper slave 2 in the receiving incapable state, the determiner 35 determines that "the receiving incapable state no longer exists and all the upper slaves 2 are in the receiving capable state" when all the receiving results of the upper slaves 2 indicate "success". While, in the case of determining that "the plurality of upper slaves 2 include at least one upper slave 2 in the receiving incapable state, the determiner 35 determines that "the receiving incapable state still exists" when the receiving results of the upper slaves 2 include a receiving result indicating "failure".

When the determiner 35 determines that "the receiving incapable state no longer exists and all the upper slaves 2 are in the receiving capable state", the control unit 32 of the lower master 3 instructs the communication unit 33 to stop sending the second beacon signal. In contrast, when the determiner 35 determines that "the receiving incapable state still exists", the control unit 32 instructs the communication unit 33 to continue sending the second beacon signal.

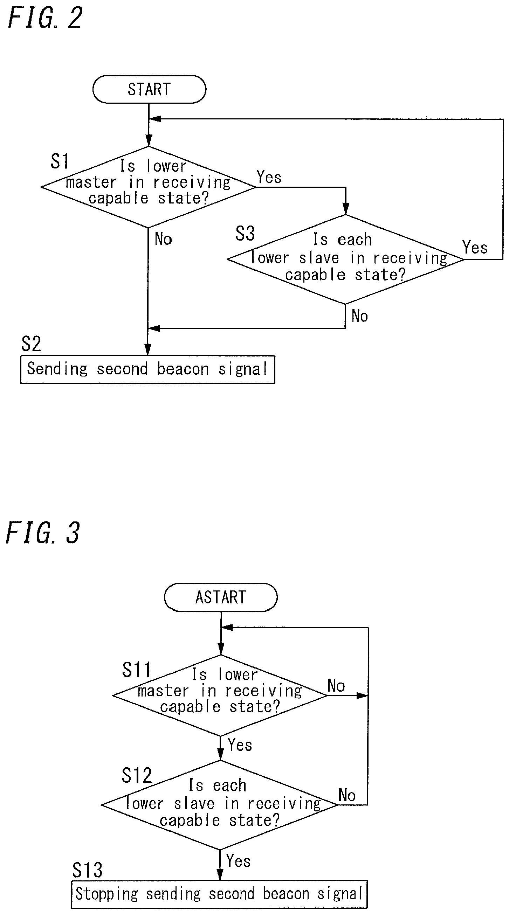

To summarize the aforementioned process of the control unit 32 in the lower master 3, the process of the control unit 32 includes a sending process of starting sending the second beacon signal based on the determination result of the determiner 35, and a stopping process of stopping sending the second beacon signal based on the determination result of the determiner 35. FIG. 2 and FIG. 3 show flow charts of the sending process and the stopping process of the lower master 3, respectively.

In the sending process, the determiner 35 determines whether the lower master 3 is in the receiving capable state or not (S1). When the determiner 35 determines that "the lower master 3 is not in the receiving capable state (is in the receiving incapable state)" (S1: No), the control unit 32 instructs the communication unit 33 to send the second beacon signal (S2). When determining that "the lower master 3 is in the receiving capable state" (S1: Yes), the determiner 35 determines whether each lower slave 4 is in the receiving capable state (S3). When it is determined that "each lower slave 4 is not in the receiving capable state (at least one lower slave 4 is in the receiving incapable state)" (S3: No), the control unit 32 instructs the communication unit 33 to send the second beacon signal (S2). When determining that "each lower slave 4 is in the receiving capable state" (S3: Yes), the determiner 35 performs again the determination process of determining whether the lower master 3 is in the receiving capable state, which is already described in step S1.

In the stopping process, the determiner 35 determines whether the lower master 3 is in the receiving capable state (S11). When determining that "the lower master 3 is in the receiving capable state" (S11: Yes), the determiner 35 determines whether each lower slave 4 is in the receiving capable state (S12). When the determiner 35 determines that "each lower slave 4 is in the receiving capable state" (S12: Yes), the control unit 32 instructs the communication unit 33 to stop sending the second beacon signal (S13). When determining that "the lower master 3 is not in the receiving capable state (is in the receiving incapable state)" (S 11: No), the determiner 35 performs again the determination process of determining whether the lower master 3 is in the receiving capable state which is already described in step S 11. When determining that "each lower slave 4 is not in the receiving capable state (at least one lower slave 4 is in the receiving incapable state)" (S12: No), the determiner 35 performs again the determination process of determining whether the lower master 3 is in the receiving capable state which is already described in step S 11.

The communication system 10 of the present embodiment further includes another lower system 200 different from the lower system 20. The lower system 200 includes one lower system master (lower master) and lower system slaves (lower slaves) like the lower system 20. In the lower system 200, the lower master and the lower slaves each include a CO (carbon monoxide) detector instead of the fire detector 31 or 41. In short, in the lower system 200, the lower master and the lower slaves each have a function of detecting generation of carbon monoxide. These lower master and lower slaves are mounted on a ceiling of a basement or a garage of a single dwelling, for example. Note that, components other than the CO detector are same as or similar to those of the lower master 3 and the lower slaves 4 of the lower system 20, and therefore only the CO detector is described here while descriptions to the other components are omitted for avoiding redundancy.

The CO detector is configured to detect carbon monoxide and change a detection amount (for example, a voltage) according to a generation amount of the carbon monoxide (concentration). Examples of a method for detecting carbon monoxide may include an electrochemical method, a contact combustion based method, and a semiconductor based method. The electrochemical method is a method of measuring a generation amount of carbon monoxide based on electric energy converted from chemical reaction energy produced by oxidation-reduction reaction. The contact combustion based method is a method of measuring a generation amount of carbon monoxide based on change in a voltage accompanied by an increase in a resistance of a detection element due to combustion resulting from a reaction of carbon monoxide with the detection element. The semiconductor based method is a method of measuring a generation amount of carbon monoxide based on a change in electric conductivity of a metal oxide semiconductor due to adsorption of gas on a surface thereof. The CO detector compares the detection amount with a threshold value preliminary set by the CO detector. When the detection amount exceeds the threshold value, the CO detector determines that carbon monoxide has been generated.

### 3 EXAMPLES OF OPERATIONS

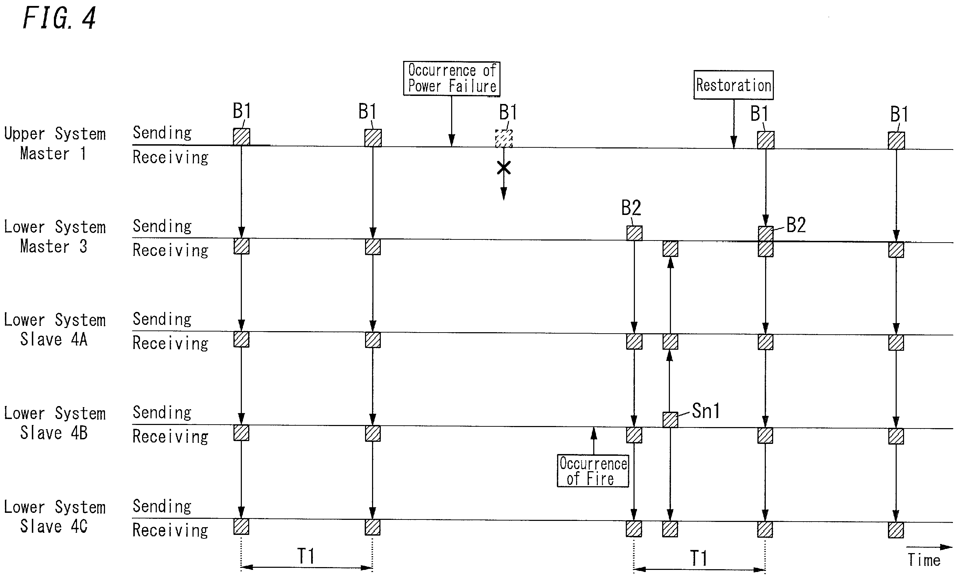

Next, examples of operations of the communication system 10 of the present embodiment are described with reference to FIG. 4. Here, description is made to an example where one upper system master 1, one lower system master 3, and three lower system slaves 4 communicate with each other. In FIG. 4, only to distinguish the three lower system slaves 4 from each other, reference signs 4A, 4B, and 4C are attached to the three lower system slaves. Further, in FIG. 4, "Sending" of the upper system master 1 denotes operation of the sending circuit of the first communication unit 12 (each hatched box indicates it is in sending operation). "Receiving" of the upper system master 1 denotes operation of the receiving circuit of the first communication unit 12 (each hatched box indicates it is in receiving operation). Further, "Sending" of the lower system master 3 denotes operation of the sending circuit of the communication unit 33 (each hatched box indicates it is in sending operation). "Receiving" of the lower system master 3 denotes operation of the receiving circuit of the communication unit 33 (each hatched box indicates it is in receiving operation). Furthermore, "Sending" of each of the lower system slaves 4A to 4C denotes operation of the sending circuit of the communication unit 43 (each hatched box indicates it is in sending operation). "Receiving" of each of the lower system slaves 4A to 4C denotes operation of the receiving circuit of the communication unit 43 (each hatched box indicates it is in receiving operation). Moreover, in FIG. 4, "B1", "B2", and "Sn1" denote the first beacon signal, the second beacon signal, and the notification signal, respectively.

The upper master 1 sends the first beacon signal B1 with a predetermined period T1. While the upper master 1 normally communicates with the lower master 3 and the lower slaves 4A to 4C, the lower master 3 and the lower slaves 4A to 4C succeed in receiving the first beacon signal B1 from the upper master 1. The lower master 3 and the lower slaves 4A to 4C establish synchronization based on the first beacon signal B 1. The lower master 3 does not send the second beacon signal B2 while the lower master 3 and the lower slaves 4A to 4C are in the receiving capable state.

When a power failure occurs, supply of power to the upper master 1 is stopped, and therefore the first beacon signal B1 is not sent from the upper master 1. Hence, the lower master 3 and the lower slaves 4A to 4C each become in the receiving incapable state. Since the lower master 3 is in the receiving incapable state, the lower master 3 sends the second beacon signal B2 with the predetermined period T1. The lower master 3 and the lower slaves 4A to 4C establish synchronization based on the second beacon signal B2.

When the fire detector 41 in the lower slave 4B detects a fire, the lower slave 4B issues a fire warning from the alarm 44. Additionally, the lower slave 4B sends the notification signal Sn1 for announcing occurrence of a fire to the lower master 3 and the lower slaves 4A and 4C at a predetermined sending timing with reference to a timing of receiving the second beacon signal B2. When receiving the notification signal Sn1 from the lower slave 4B, the lower master 3 issues a fire warning from the alarm 34. Moreover, when receiving the notification signal Sn1 from the lower slave 4B, the lower slaves 4A and 4C each issue a fire warning from the alarm 44.

When the power failure is restored, supply of power to the upper master 1 is resumed and the upper master 1 sends the first beacon signal B1. The lower master 3 and the lower slaves 4A to 4C each receive the first beacon signal B1 from the upper master 1. Accordingly, the lower master 3 and the lower slaves 4A to 4C each are restored from the receiving incapable states, and thus the lower master 3 stops sending the second beacon signal B2.

### 4 ADVANTAGEOUS EFFECTS

As described above, the communication system 10 of the present embodiment includes the plurality of upper system slaves 2 and the upper system master 1. The upper system master 1 is configured to send the first beacon signal to the plurality of upper system slaves 2 to thereby establish the synchronous communication with the plurality of upper system slaves 2. The plurality of upper system slaves 2 include the plurality of lower system slaves 4 and the lower system master 3. The lower system master 3 is configured to send the second beacon signal to the plurality of lower system slaves 4 to thereby establish the synchronous communication with the plurality of lower system slaves 4. Additionally, the lower system master 3 is configured to send the second beacon signal to the plurality of lower system slaves 4 when at least any one of the plurality of upper system slaves 2 is in the receiving incapable state of being incapable of receiving the first beacon signal.

According to the above configurations, when at least any one of the plurality of upper system slaves 2 cannot receive the first beacon signal from the upper system master 1, the lower system master 3 sends the second beacon signal on behalf of the upper system master 1. Therefore, even when the upper system slave 2 cannot receive the first beacon signal from the upper system master 1, the communication system 10 of the present embodiment enables the upper system slaves 2 to establish synchronization based on the second beacon signal to thereby perform the synchronous communication between the upper system slaves 2. Additionally, the upper system slave 2 is enabled to continue the synchronous communication even when failing in receiving the first beacon signal from the upper system master 1. This may lead to a decrease in power consumption.

Furthermore, in the communication system 10 of the present embodiment, the upper system slaves 2 included in the lower system 20 each include a fire alarm, and the synchronous communication can be performed within the lower system 20 even when at least any one of the upper system slaves 2 is in the receiving incapable state. Accordingly, delay in cooperation for a fire warning within the lower system 20 can be suppressed when a fire occur. And, the lower system slave 4 at the origin of the fire is not required to repeat sending the notification signal for announcing occurrence of a fire, and this may lead to a decrease in power consumption.

Additionally, like the present embodiment, the lower system master 3 may preferably include the determiner 35 and the communication unit 33. The determiner 35 may preferably be configured to determine whether the plurality of lower system slaves 4 include at least one non-receiving slave 4 defined as a lower system slave 4 in the receiving incapable state. The communication unit 33 may preferably be configured to send the second beacon signal to the plurality of lower system slaves 4 when the determiner 35 determines that the plurality of lower system slaves 4 include the at least one non-receiving slave 4.

According to the above configurations, the lower system master 3 can send the second beacon signal even when it (the lower system master 3) can receive the first beacon signal but at least any one of the lower system slaves 4 cannot receive the first beacon signal.

Moreover, like the present embodiment, the communication unit 33 may preferably be configured to stop sending the second beacon signal when at least one lower system slave 4 determined to be the at least one non-receiving slave 4 is restored from the receiving incapable state and when all the plurality of upper system slaves 2 are in the receiving capable state of being capable of receiving the first beacon signal.

According to the above configurations, the lower system master 3 stops sending the second beacon signal when all the plurality of upper system slaves 2 become in the receiving capable state, and therefore power consumption can be reduced.

Additionally, like the present embodiment, it is preferable that the plurality of lower system slaves 4 each be configured to distinguish the first beacon signal and the second beacon signal from each other and to, when succeeding in receiving both the first beacon signal and the second beacon signal establish synchronous communication based on the second beacon signal.

According to the above configurations, while the lower system master 3 sends the second beacon signal, each upper system slave 2 establishes synchronization by use of the second beacon signal. Therefore, the upper system slaves 2 can establish synchronization with each other even when the plurality of upper system slaves 2 includes one or more upper system slaves 2 in the receiving capable state and one or more upper system slaves 2 in the receiving incapable state.

Additionally, the communication device 3 of the present embodiment is used in the communication system 10 to serve as the lower system master 3.

According to the above configurations, the communication device 3 of the present embodiment sends the second beacon signal on behalf of the upper system master 1 when at least any one of the upper system slaves 2 cannot receive the first beacon signal from the upper system master 1. Therefore, the communication device 3 can establish synchronization by use of the second beacon signal and perform the synchronous communication.

### 5 MODIFICATIONS

Hereinafter, modifications of the communication system 10 of the present embodiment are described.

In the aforementioned examples, the lower master 3 is configured to stop sending the second beacon signal when determining that one or more upper slaves 2 determined to be in the receiving incapable state are restored from the receiving incapable state and that all the upper slaves 2 are in the receiving capable state. However, conditions for stopping sending the second beacon signal are not limited to the above. The lower master 3 may be configured to stop sending the second beacon signal when determining that one or more upper slaves 2 determined to be in the receiving incapable state are restored from the receiving incapable state. For example, in a case where the plurality of lower slaves 4 include at least one lower slave 4 (the non-receiving slave 4) in the receiving incapable state, the lower master 3 stops sending the second beacon signal when the at least one lower system slave (4) determined to be the at least one non-receiving slave (4) is restored from the receiving incapable state.

In short, the communication unit 33 of the lower system master 3 may preferably be configured to stop sending the second beacon signal when at least one lower system slave 4 determined to be the at least one non-receiving slave 4 is restored from the receiving incapable state.

According to the above configurations, the lower system master 3 stops sending the second beacon signal when at least one lower system slave 4 determined to be the at least one non-receiving slave 4 is restored from the receiving incapable state. This may lead to a decrease in power consumption. Additionally, it is possible to simplify the stopping process of the lower system master 3 for stopping sending the second beacon signal.

The determiner 35 may determine whether the lower master 3 is in the receiving capable state, based on a received signal strength indicator (RSSI) of the first beacon signal given by the communication unit 33. The determiner 35 determines that the lower master 3 is in the receiving capable state when the received signal strength indicator of the first beacon signal given by the communication unit 33 is equal to or larger than a threshold value, and determines that the lower master 3 is in the receiving incapable state when the received signal strength indicator is smaller than the threshold value. Similarly, the determiner 35 may determine whether a lower slave 4 is in the receiving capable state, based on a received signal strength indicator of the first beacon signal given by the communication unit 43 of the lower slave 4. The determiner 35 determines that a lower slave 4 is in the receiving capable state when the received signal strength indicator of the first beacon signal given by the communication unit 43 of the lower slave 4 is equal to or larger than a threshold value, and determines that the lower slave 4 is in the receiving incapable state when the received signal strength indicator is smaller than the threshold value.

The lower master 3 may notify the lower slaves 4 of a channel of a beacon signal (the first beacon signal or the second beacon signal) for establishing synchronization. The lower master 3 instructs the lower slaves 4 to establish synchronization based on the second beacon signal prior to starting sending the second beacon signal. Further, the lower master 3 instructs the lower slaves 4 to establish synchronization based on the first beacon signal prior to stopping sending the second beacon signal. Accordingly, the lower slave 4 can know timings of start and stop sending the second beacon signal. Therefore, the lower slave 4 can stop waiting for the second beacon signal during a period of time when the second beacon signal is not sent. It is enabled to simplify the receiving process.

The plurality of upper slaves 2 constituting the lower system 20 may have common configurations. In this case, one upper slave 2 of the plurality of upper slaves 2 functions as the lower master 3 and remaining upper slaves 2 function as the lower slaves 4. For example, an upper slave 2 which is one of the plurality of upper slaves 2 and is first registered on the upper master 1 may function as the lower master 3, and other upper slaves 2 may function as the lower slaves 4. Alternatively, the upper master 1 may be configured to designate one of the plurality of upper slaves 2 so that a designated one functions as the lower master 3. For example, the upper master 1 compares received signal strength indicators of wireless signals sent from the individual upper slaves 2 to it (the upper master 1) with each other, and instructs an upper slave 2 which sends the wireless signal giving the largest received signal strength indicator, to function as the lower master 3.

Data (synchronization information) included in the first beacon signal may be used to determine a timing of periodic intermittent receiving operation. Based on the synchronization information included in the first beacon signal, timings of the intermittent receiving operation by the upper slaves 2 and a timing of sending operation by the upper master 1 are determined. Additionally, based on the synchronization information included in the first beacon signal, timings of sending operation by the lower slave 4 and a timing of the intermittent receiving operation by the lower master 3 are determined. Such intermittent receiving operations may lead to a decrease in power consumption necessary for receiving operations.

A communication scheme between the upper master 1 and the upper slaves 2 and a communication scheme between the lower master 3 and the lower slaves 4 are not limited to TDMA but may be carrier sense multiple access (CSMA). In this case, the synchronization information included in the first beacon signal may be used to determine a timing of intermittent receiving operation, or the like.

In relation to communication between the upper master 1 and the upper slaves 2, time slots of upstream (from the upper slaves 2 to the upper master 1) may be omitted. In this case, the upper slaves 2 cannot notify the upper master 1 of occurrence of a fire actively. However, the upper master 1 can know whether a fire has occurred, by sending information for inquiring whether a fire has occurred, by use of a time slot of downstream (from the upper master 1 to the upper slaves 2) by polling, for example. In this case, power consumptions of the upper slaves 2 can be more reduced. Since the upper master 1 is configured to operate with power supplied from the commercial power supply, influence on operations caused by an increase in the number of times of sending is suppressed.

In the present embodiment, only fire alarms are used to constitute the lower system 20. However, a CO detection device including a CO detector may be included as an upper slave 2. Alternatively or additionally, an upper slave 2 (the lower master 3 or the lower slave 4) may include a CO detector in addition to the fire detector 31 or 41.

To enable different systems (the lower systems 20 and 200) to cooperate with each other, the upper master 1 may be configured to control devices constituting these different systems (the lower systems 20 and 200). For example, when receiving from an upper slave 2 (fire alarm) the notification signal indicating that a fire has occurred, the upper master 1 instructs the lower master and the lower slaves constituting the lower system 200 to issue warnings.

The above descriptions relate to a case where the lower system 20 includes three upper slaves 2. However, the number of upper slaves 2 is not limited to three, but may be two or four or more.

Note that, the aforementioned embodiment and modifications are some of possible examples included in the scope of the present invention. Of course, the scope of the present invention is not limited to include the aforementioned embodiment and modifications only, but may include other embodiments and modifications as well as the aforementioned embodiment and modifications which are modified in various ways according to design or the like, as long as they do not depart from the technical concept underlying the present invention.

### 6 CONCLUSIONS

A communication system (10) of the first aspect includes a plurality of upper system slaves (2) and an upper system master (1). The upper system master (1) is configured to send a first beacon signal (B1) to the plurality of upper system slaves (2) to thereby establish synchronous communication with the plurality of upper system slaves (2). The plurality of upper system slaves (2) include a plurality of lower system slaves (4), and a lower system master (3). The lower system master (3) is configured to send a second beacon signal (B2) to the plurality of lower system slaves (4) to thereby establish synchronous communication with the plurality of lower system slaves (4). The lower system master (3) is configured to send the second beacon signal (B2) to the plurality of lower system slaves (4) when at least any one of the plurality of upper system slaves (2) is in a receiving incapable state of being incapable of receiving the first beacon signal (B1).

According to the first aspect, the synchronous communication can be performed between the upper system slaves (2) even when one or more of the upper system slaves (2) cannot receive the first beacon signal (B1) from the upper system master (1).

In the communication system (10) of the second aspect which would be realized in combination with the first aspect, the lower system master (3) includes a determiner (35) and a communication unit (33). The determiner (35) is configured to determine whether the plurality of lower system slaves (4) include at least one non-receiving slave (4) defined as a lower system slave (4) in the receiving incapable state. The communication unit (33) is configured to send the second beacon signal (B2) to the plurality of lower system slaves (4) when the determiner (35) determines that the plurality of lower system slaves (4) include the at least one non-receiving slave (4).

According to the second aspect, the lower system master (3) can send the second beacon signal (B2) even when the lower system master (3) can receive the first beacon signal (B1) but at least any one of the lower system slaves (4) cannot receive the first beacon signal (B1).

In the communication system (10) of the third aspect which would be realized in combination with the second aspect, the communication unit (33) is configured to stop sending the second beacon signal (B2) when at least one lower system slave (4) determined to be the at least one non-receiving slave (4) is restored from the receiving incapable state.

According to the third aspect, the lower system master (3) stops sending the second beacon signal (B2) when at least one lower system slave (4) determined to be the at least one non-receiving slave (4) is restored from the receiving incapable state, and therefore power consumption can be reduced.

In the communication system (10) of the fourth aspect which would be realized in combination with the second aspect, the communication unit (33) is configured to stop sending the second beacon signal (B2) when at least one lower system slave (4) determined to be the at least one non-receiving slave (4) is restored from the receiving incapable state and when all the plurality of upper system slaves (2) are in a receiving capable state of being capable of receiving the first beacon signal (B1).

According to the fourth aspect, the lower system master (3) stops sending the second beacon signal (B2) when all the plurality of upper system slaves (2) become in the receiving capable state, and therefore power consumption can be reduced.

In the communication system (10) of the fifth aspect which would be realized in combination with any one of the first to fourth aspects, the plurality of lower system slaves (4) are each configured to distinguish the first beacon signal (B1) and the second beacon signal (B2) from each other and to, when succeeding in receiving both the first beacon signal (B1) and the second beacon signal (B2) establish synchronous communication based on the second beacon signal (B2).

According to the fifth aspect, the plurality of upper system slaves (2) can establish synchronization with each other even when the plurality of upper system slaves (2) includes one or more upper system slaves (2) in the receiving capable state and one or more upper system slaves (2) in the receiving incapable state.

A communication device (3) of the sixth aspect is used in the communication system (10) of any one of the first to fifth aspects to serve as the lower system master (3).

Differently stated, the communication device (3) of the sixth aspect is used in a communication system (10) including a plurality of upper system slaves (2) and an upper system master (1). The upper system master (1) is configured to send a first beacon signal (B1) to the plurality of upper system slaves (2) to thereby establish synchronous communication with the plurality of upper system slaves (2). The communication device (3) is included in the plurality of upper system slaves (2) together with a plurality of lower system slaves (4), to serve as a lower system master (3). The communication device (3) is configured to send a second beacon signal (B2) to the plurality of lower system slaves (4) to thereby establish synchronous communication with the plurality of lower system slaves (4). The communication device (3) is configured to send the second beacon signal (B2) to the plurality of lower system slaves (4) when at least any one of the plurality of upper system slaves (2) is in a receiving incapable state of being incapable of receiving the first beacon signal (B1).

According to the sixth aspect, Therefore, the upper system slaves (2) can establish synchronization with each other even when the upper system slaves (2) cannot receive the first beacon signal (B1) from the upper system master (1).

### Reference Signs List

- 10: Communication System
- 1: Upper System Master (Upper Master)
- 2: Upper System Slave (Upper Slave)
- 3: Lower System Master (Lower Master), Communication Device
- 33: Communication Unit
- 35: Determiner
- 4 (4A, 4B, 4C): Lower System Slave (Lower Slave), Non-receiving Slave
- B1: First Beacon Signal
- B2: Second Beacon Signal

## Claims

1. A communication system (10) comprising:
a plurality of upper system slaves (2); and
an upper system master (1) configured to send a first beacon signal (B1) to the plurality of upper system slaves (2) to thereby establish synchronous communication with the plurality of upper system slaves (2),
wherein:
the plurality of upper system slaves (2) include a plurality of lower system slaves (4), and a lower system master (3) configured to send a second beacon signal (B2) to the plurality of lower system slaves (4) to thereby establish synchronous communication with the plurality of lower system slaves (4); and
the lower system master (3) is configured to send the second beacon signal (B2) to the plurality of lower system slaves (4) when at least any one of the plurality of upper system slaves (2) is in a receiving incapable state of being incapable of receiving the first beacon signal (B1).

2. The communication system (10) according to claim 1, wherein
the lower system master (3) includes
a determiner (35) configured to determine whether the plurality of lower system slaves (4) include at least one non-receiving slave (4) defined as a lower system slave (4) in the receiving incapable state; and
a communication unit (33) configured to send the second beacon signal (B2) to the plurality of lower system slaves (4) when the determiner (35) determines that the plurality of lower system slaves (4) include the at least one non-receiving slave (4).

3. The communication system (10) according to claim 2, wherein
the communication unit (33) is configured to stop sending the second beacon signal (B2) when at least one lower system slave (4) determined to be the at least one non-receiving slave (4) is restored from the receiving incapable state.

4. The communication system (10) according to claim 2, wherein
the communication unit (33) is configured to stop sending the second beacon signal (B2) when at least one lower system slave (4) determined to be the at least one non-receiving slave (4) is restored from the receiving incapable state and when all the plurality of upper system slaves (2) are in a receiving capable state of being capable of receiving the first beacon signal (B1).

5. The communication system (10) according to any one of claims 1 to 4, wherein
the plurality of lower system slaves (4) are each configured to distinguish the first beacon signal (B1) and the second beacon signal (B2) from each other and to, when succeeding in receiving both the first beacon signal (B1) and the second beacon signal (B2) establish synchronous communication based on the second beacon signal (B2).

6. A communication device (3) used in the communication system (10) according to any one of claims 1 to 5 to serve as the lower system master (3).
